# EUROPEAN PATENT SPECIFICATION

(11) **EP 4 330 539 B1**
(45) Date of publication and mention of the grant of the patent: **09.07.2025**
(21) Application number: 22730564.6
(22) Date of filing: 31.05.2022
(51) Int. Cl.: F03D 1/06

(54) **ROOT ASSEMBLY OF A WIND TURBINE BLADE FOR A WIND TURBINE, WIND TURBINE BLADE AND WIND TURBINE**
FUSSANORDNUNG EINER WINDTURBINENSCHAUFEL FÜR EINE WINDTURBINE, WINDTURBINENSCHAUFEL UND WINDTURBINE
ENSEMBLE BASE D'UNE PALE POUR ÉOLIENNE, PALE D'ÉOLIENNE ET ÉOLIENNE

(30) Priority: 05.07.2021 EP 21183730
(43) Date of publication of application: 06.03.2024
(73) Proprietor: Siemens Gamesa Renewable Energy A/S, 7330 Brande (DK)
(72) Inventor: PERNITSKY, Cole Campbell, 9000 Aalborg (DK)
(74) Representative: SGRE-Association
(86) International application number: PCT/EP2022/064784
(87) International publication number: WO 2023/280475

(56) References cited:
- EP-A1- 1 956 235
- EP-A1- 3 581 790
- WO-A1-2013/083451
- CN-A- 101 776 116
- US-A1- 2009 263 250
- US-B2- 10 100 804
- US-B2- 8 545 182

## Description

The invention relates to a root assembly of a wind turbine blade for a wind turbine, a wind turbine blade and a wind turbine.

Wind turbine blades are typically attached to the hub via one of two connection methods: T-bolts or root inserts. By means of these connection methods, large loads from the wind turbine blades to the hub must be transferred. The industry trend towards longer turbine blades increases these loads so that stronger roots are needed.

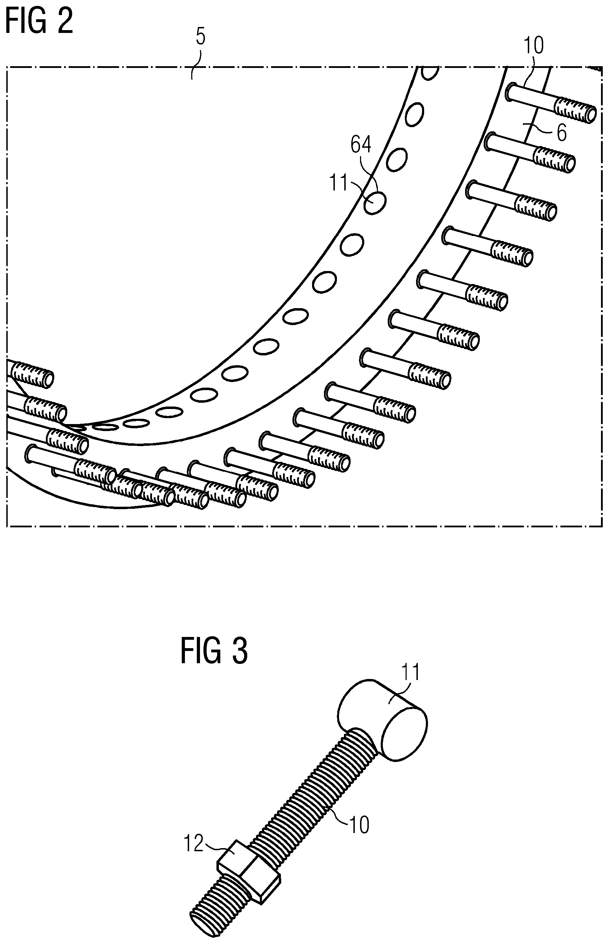

Root assemblies referred to herein are understood as an assembly comprising a root portion of a wind turbine blade connected to a bearing or a hub flange of the hub of the wind turbine. As explained above, typically, the bearing or hub flange is connected to the root portion of the wind turbine blade by means of multiple T-bolts, that is bolts secured within bushings (see FIG. 2), or by means of root inserts introduced into the laminate material of the root portion.

To resist the very high loads in large wind turbines having long wind turbine blades, a large number of bolts and bushings or inserts need to be provided in the root assembly. However, the space for the bolts and bushings or inserts on a common circumference of the root portion is limited. Therefore, it is known to provide the root assembly with a staggered configuration of the multiple bolts to increase the so-called root capacity, which indicates the number of T-bolts or root inserts in a root assembly.

However, the root portions, in particular when having a staggered configuration of bolts, still experience large strain and are therefore susceptible to failure. Examples of prior art solutions are available in documents US 10 100 804 B2, US 8 545 182 B2 and US 2009/263250 A1.

Accordingly, it is an object of the invention to provide an improved root assembly, wind turbine blade and wind turbine not having the previously described disadvantage, in particular having a long service life.

This object is solved by the subject-matter of the claims. In particular, the object is solved by a root assembly of a wind turbine blade of a wind turbine according to claim 1, a wind turbine blade according to claim 12 and a wind turbine according to claim 13. Further details of the invention unfold from the other claims as well as the description and the drawings. Thereby, the features and details described in connection with the root assembly of the invention apply in connection with the wind turbine blade of the invention and with the wind turbine of the invention, so that regarding the disclosure of the individual aspects of the invention, it is or can be referred to one another.

According to a first aspect of the invention, the object is solved by a root assembly of a wind turbine blade for a wind turbine. A root portion of the root assembly comprises a root segment, the root segment having a first centerline located in the center of a thickness of the root segment measured along a radial direction of the root segment and extending along a circumferential direction of the root segment. A root attachment face of the root portion is attached to a bearing or a hub flange of the root assembly by means of multiple bolts or root inserts, the multiple bolts or root inserts being arranged with their centers along a second centerline extending along the circumferential direction of the root segment. The second centerline is offset from the first centerline.

The invention is based on the finding that by offsetting the second centerline from the first centerline, whereby the bolts or root inserts are shifted away from the thickness center of the root segment either towards the inside or the outside of the wind turbine blade, the strain profile through the thickness of the wind turbine blade can be equalized. This equalization also comes with a reduction in strain that can be used to increase the root capacity related to the number of bolts or root inserts placed in the root portion. In this regard, the centerlines represent geometric lines that can be drawn in the root assembly to determine the offset. In particular, a radial distance may be measured between both centerlines, indicating the amount or size of the offset. The centerlines must not actually be drawn or be visible in the root assembly but merely be imaginary or drawable by the instruction given herein, meaning that the first centerline is drawn in the center of the thickness of the root segment measured along the radial direction of the root segment and extending along the circumferential direction of the root segment, and the second centerline is drawn through the centers of the bolts or root inserts or cavities, in which they are inserted, along the circumferential direction of the root segment.

Depending on the design of the wind turbine blade, the root portion may comprise one or more root segments. For example, in a butterfly design of a wind turbine blade, the root portion typically consists of two root segments. In an integral design of a wind turbine blade, the root portion may consist of multiple root segments joined together at respective root segment interfaces. The root segments may in particular have a round shape, i.e., be rounded and moreover in particular have a partially circular or elliptical shape. In other words, the root segments may form an arc or have an arc shape. The root segments may have equal or different arc lengths among them. Thereby, a cylindrically shaped root portion of the wind turbine blade may be provided. The cross section of the root portion may have a circular or an elliptical shape. The root segments may be reinforcement blocks (such as pre-cured laminate blocks) that are placed on or within a shell laminate of the wind turbine blade during manufacture of the shell, or they may simply be reinforced areas of the shell constructed by additional layers placed and cured together with the rest of the shell. The root segments may be manufactured from a fiber composite material, in particular a fiber composite lay-up. Accordingly, the material of the root segment may also be referred to as a laminate. The fiber composite material may have glass fibers and/or carbon fibers, for example.

In particular, the second centerline is offset from the first centerline in a direction towards an inside of the root portion. This is advantageous because past the bushings and towards the blade tip of the wind turbine blade, the thickness of the root portion is typically reduced through a tapered geometry to transition from the root region to the shell of the wind turbine blade. This tapering offsets the first centerline towards the outer surface of the wind turbine blade, and subsequently, the point at which the root portion is loaded differs between the hub and tip ends. The result of this is that the outer surface of the wind turbine blade carries more load and thus more strain. This strain bias through the laminate is disadvantageous because the material is not loaded evenly. By offsetting the second centerline towards the inside of the root portion or, in other words, towards the center (radially) of the root portion or wind turbine blade, the strain bias can be compensated for so as to reduce the strain on the outer surface and provide the above-mentioned equalization of strain in the wind turbine blade.

Further, the second centerline may be offset from the first centerline by less than 15 %, in particular less than 10 %, of the thickness of the root segment. It has been found that a radial offset larger than that is detrimental to equalizing the strain profile of the wind turbine blade.

Moreover, the second centerline is offset from the first centerline by 0.5 % to 5 %, in particular 1 % to 3 %, of the thickness of the root segment. The equalization of the strain profile through the laminate of the wind turbine blade and the reduction in overall strain in the root portion has been found to be most preferential in this area.

Also, it may be provided that the first centerline extends through the multiple bolts or root inserts. In this case, the first centerline does not extend through the centers of the bolts or root inserts but offset from their centers and still close enough to the second centerline such that the first centerline extends through the bolts or root inserts. In this case, the radial distance between the two centerlines cannot be greater than half of the diameter of the bolts, root inserts or cavities, in which they are inserted.

It may be provided that at least half or more than half, at least two-thirds or more than two-thirds or all of the multiple bolts or root inserts of the root assembly are arranged with their centers along the second centerline. Accordingly, there may only be one row of bolts or root inserts on the root attachment face along which the bolts or root inserts are introduced into the root segment. The provision of, for example, two or more rows of bolts or root inserts at the root attachment face would introduce further strain between the bolts and can thereby be avoided.

Each of the multiple bolts may be connected to one of multiple bushings fixedly arranged within the root segment such that the multiple bolts are arranged adjacent to each other along a circumference of the root portion, and that the bushings are arranged adjacent to each other along the circumference of the root portion. Adjacent bushings may be offset from one another in a way such that adjacent bushings are provided at an axial distance from one another, the axial distance being measured in an axial direction from the root attachment face towards the bushings (or, in other words, the tip of the blade) and between centers of the adjacent bushings. The combination of bolt and bushing is commonly referred to as a T-bolt. In particular, the bolts may have threads on an outer circumference thereof. By means of these outer threads, they may be interlocked with inner threads of the bushings. By means of the axial spacing of adjacent bushings, a so-called staggered configuration of t-bolts may be achieved. The staggered configuration of t-bolts is characterized by adjacent bushings being spaced apart from one another in the axial direction or, in other words, being alternatingly located at different distances from the root attachment surface. Accordingly, adjacent bolts alternatingly have a different length to realize the staggered configuration. The staggered configuration allows an increase of root capacity in the axial direction without increasing the spacing in the circumferential direction of the root segment.

However, the staggered configuration still has some drawbacks. In particular, a root segment having a quotient between the axial distance and a bushing diameter of the bushings of 2.3 or less results in a high strain profile that is disadvantageous with respect to the service life of the wind turbine blade.

Therefore, preferably, a quotient between the axial distance and a bushing diameter of the bushings should be 2.5 or greater. A lateral spacing in a circumferential direction of the root segments between bolts is typically set by external parameters; however, the axial distance or, in other words, axial spacing between the centers of the bolts or cavities, in which the bolts are fitted, can be adjusted. By changing the axial distance in dependence to the bushing diameter as described herein, the strain in the laminate of the root portion can be reduced. Thereby, the distance between the two staggered rows of bolts may be optimized to a region of optimal strain reduction. Accordingly, a root bolt pattern using alternating near and far bolts may be implemented. Or, in other words, a root bolt pattern having inner bolts located in a first staggered row and outer bolts in a second staggered row, with an axial distance between the rows being according to a quotient between the axial distance and bushing diameter of the bushings of at least 2.5, may be implemented. For calculating the quotient, it is sufficient to calculate the quotient based on the axial distance of merely one pair of adjacent bushings with respect to one bushing diameter of one bushing of this pair of adjacent bushings. However, preferably, most or all of the bushings have the same diameter. Also, preferably, the axial distance between adjacent bushings is the same for most or all pairs of adjacent bushings.

Preferably, the quotient between the axial distance and the bushing diameter of the bushings may be in the range of 2.5 to 5. More preferably, the quotient between the axial distance and the bushing diameter of the bushings may be within the range of 2.7 to 4.8. And even more preferably, the quotient between the axial distance and the bushing diameter of the bushings may be within the range of 3 to 4.5 or 3.5 to 4.5. This quotient range has been found to be optimal for the laminate of the root segment to become able to carry a higher load, and for the root portion having the root segment or root segments thereby becoming able to support a longer wind turbine blade, and for spacing the bushings closer together, allowing for more bolts around the circumference of the root portion, which also allows for stronger and/or longer wind turbine blades.

The multiple bolts may have a first length or a second length, wherein the second length is greater than the first length, and wherein the bolts of the multiple bolts having the first length and the bolts of the multiple bolts having the second length are alternatingly connected to the adjacent offset bushings. The multiple bolts may be secured against the bearing or the hub flange by means of nuts. This is a particularly simple and easy way of securing the bearing or hub flange to the root portion.

According to a second aspect of the invention, the object is solved by a wind turbine blade comprising the root assembly according to the first aspect of the invention.

According to a third aspect of the invention, the object is solved by a wind turbine comprising at least one wind turbine blade according to the second aspect of the invention.

The wind turbine may be a direct drive wind turbine or a geared wind turbine, for example. Further, the at least one wind turbine blade may be mounted on an outer ring of a pitch bearing of the wind turbine or on an inner ring of the pitch bearing.

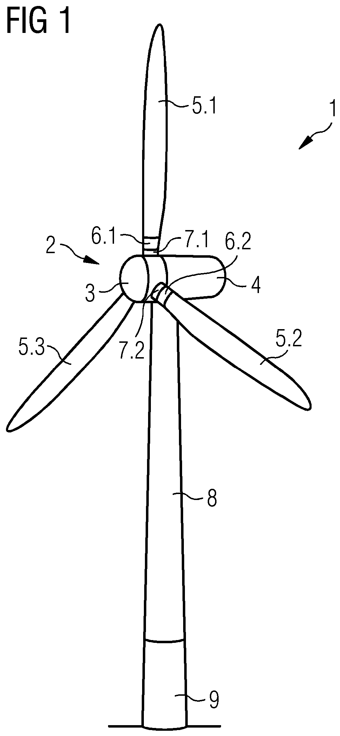

Further advantages, features and details of the invention unfold from the following description, in which by reference to drawings FIG. 1 - 13, embodiments of the present invention are described in detail. Thereby, the features from the claims as well as the features mentioned in the description can be essential for the invention as taken alone or in an arbitrary combination. In the drawings, there is schematically shown:
- FIG. 1: a side perspective view on a wind turbine;
- FIG. 2: a side perspective view on a part of a root portion of a wind turbine blade according to a first embodiment;
- FIG. 3: a side perspective view on a T-bolt;
- FIG. 4: a cross-section view on a part of a root assembly of a wind turbine blade according to a second embodiment;
- FIG. 5: a perspective view on a part of a root segment of the root assembly of FIG. 4;
- FIG. 6: a side sectional view on the wind turbine blade having the root assembly of FIG. 4;
- FIG. 7: a perspective view on a part of a T-bolt according to a design as generally used in the art;
- FIG. 8: a perspective view on a part of a T-bolt according to a design preferentially used for the root assembly of FIG. 4;
- FIG. 9: a strain profile diagram for the wind turbine blade of FIG. 6;
- FIG. 10: a strain profile diagram for different combinations of radial distances between staggered rows of bolts and axial distances between the bushings;
- FIG. 11: a strain profile diagram depending on the axial distance of bushings and the lateral distance of bushings for a given bushing diameter;
- FIG. 12: a top view on a strain contours representation of the part of the root segment of FIG. 5 having as design parameter a first quotient between the axial distance of bushings and the bushing diameter; and
- FIG. 13: a top view on a strain contours representation of the part of the root segment of FIG. 5 having as design parameter a second quotient between the axial distance of bushings and the bushing diameter.

Same objects in FIGS. 1 - 13 are denominated with the same reference number. If there is more than one object of the same kind in one of the figures, the objects are numbered in ascending order with the ascending number of the object being separated from its reference number by a dot. Also, for some of the reference numbers, indexes are used to indicate their affiliation to a specific object or to distinguish them from other reference numbers. The specific dimensions of features and parts in the figures are exemplary and may be enlarged for ease of reference only.

FIG. 1 shows a wind turbine 1 according to an embodiment of the invention. The wind turbine 1 comprises a rotor 2 having three wind turbine blades 5.1, 5.2, 5.3 connected to a hub 3. However, the number of wind turbine blades 5 may be at least one wind turbine blade 5, two wind turbine blades 5 or more than three wind turbine blades 5 and chosen as required for a certain setup of a wind turbine 1.

The hub 3 is connected to a generator (not shown) arranged inside a nacelle 4. During operation of the wind turbine 1, the wind turbine blades 5 are driven by wind to rotate, and the wind's kinetic energy is converted into electrical energy by the generator in the nacelle 4.

The nacelle 4 is arranged at the upper end of a tower 8 of the wind turbine 1. The tower 8 is erected on a foundation 9 such as a monopile or tripile. The foundation 9 is connected to and/or driven into the ground or seabed.

Each of the wind turbine blades 5.1, 5.2, 5.3 has a root portion 6.1, 6.2. These root portions 6.1, 6.2 are connected to the hub 3 by means of bearings 7.1, 7.2 or hub flanges 7.1, 7.2. In this particular view, the root portion 6 and bearing 7 or hub flange 7 of the wind turbine blade 5.3 is covered by the hub 3.

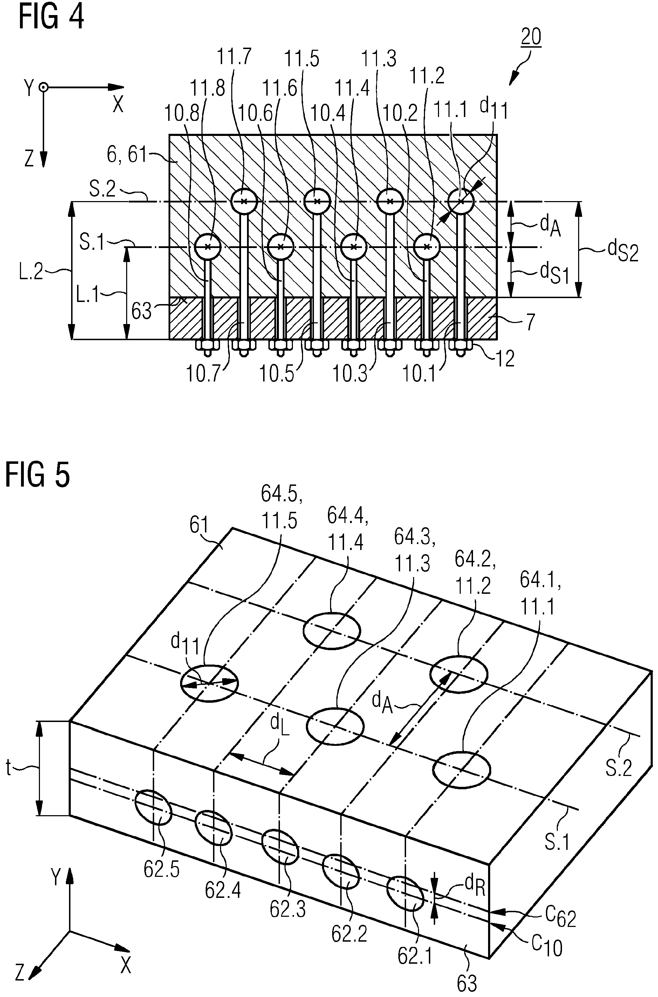

FIG. 2 shows a side perspective view on a part of a root portion 6 of a wind turbine blade 5 according to a first embodiment. Multiple bolted connection means in the form of bushings 11 are arranged within cavities 64 located in the root portion 6 along the circumference of it. Bolts 10 are attached to the bushings 11. The bolts 10 may be attached to a hub flange 7 or bearing 7 as shown in FIG. 1. As an alternative to the bolts 10 and bushings 11, root inserts (not shown) may be used as connection means. Such root inserts may be bonded within the laminate material of the root portion 6. As an alternative to the arrangement of the bushings 11 in a single row along the root portion 6 as shown in FIG. 2, a second embodiment shown in FIG. 4 realizes a staggered configuration of the bolts 10 and bushings 11 and will be explained in more detail with reference to FIG. 4.

FIG. 3 shows a side perspective view on a bolt 10 with a bushing 11, generally referred to as a T-bolt when assembled together, and a nut 12. The bushing 11 has a cylindrical shape so as to positively fit into the cavities 64. It may be placed in corresponding cavities 64 within the root portion 6, as can be seen in FIG. 2. When the bolt 10 is secured by means of the bushing 11 within the root portion 6, and the hub flange 7 or bearing 7 is attached thereto, the root portion 6 may be secured to the hub flange 7 or bearing 7 by means of the nut 12.

FIG. 4 shows a cross-section view on a part of a root assembly 20 of a wind turbine blade according to a second embodiment. In FIG. 4, the root portion 6 is only shown with one root segment 61. However, depending on the design of the wind turbine blade 5, the root portion 6 may comprise two or more root segments 61. For example, in a butterfly design of a wind turbine blade 5, the root portion 6 typically consists of two root segments 61. In an integral design of a wind turbine blade 5, the root portion 6 may consist of multiple root segments 61 joined together at respective root segment interfaces. All root segments 61 of the root portion 6 of the wind turbine blade 5 may be designed as explained below with reference to FIG. 4 and the further figures of the drawings.

The root segment 61 shown in FIG. 4 comprises multiple staggered bushings 11.1...11.8 such that respectively adjacent bushings 11.1...11.8 are alternately located at two different distances d_{S1} and d_{S2} from a root attachment surface 63, at which the root portion 6 with its root segment 61 is attached to the bearing 7 or hub flange 7. The distances d_{S1} and d_{S2} of the bushings 11.1...11.8 are measured from the centers of the bushings 11 to the root attachment face 63 in the Z direction indicated in the coordinate system with coordinates X, Y, Z depicted in FIG. 4. The Z direction corresponds to a longitudinal or axial direction of the root portion 6 or wind turbine blade 5. The Y direction corresponds to a radial direction or thickness direction of the root portion 6, along which its thickness t may be measured (see FIG. 5). And the X direction corresponds to a circumferential direction along which the circumference of the root portion 6 or wind turbine blade 5 may be measured.

By means of the two different distances d_{S1} and d_{S2} of the bushings 11.1...11.8 from the root attachment face 63, the multiple bolts 10.1...10.8 are staggered, such that the bolts 10.1...10.8 alternatingly have a first length L.1 and a second length L.2, the first length L.1 being smaller than the second length L.2. Each of the bolts 10.1...10.8 is secured within the root segment 61 by means of a nut 12, thereby securing the bearing 7 or hub flange 7 to the root segments 61 and root portion 6 and securely fastening the wind turbine blade 5 having the root portion 6 to the hub 2 of the wind turbine 1.

As seen in FIG. 4, the adjacent bushings 11.1...11.8 alternatingly extend along a first staggered row S.1 and a second staggered row S.2. The staggered rows S.1, S.2 extend through centers of the bushings 11.1...11.8 while running perpendicular to the Z direction or, in other words, running in the X direction. An axial distance d_{A} between the staggered rows S.1, S.2 or the centers of each one of the adjacent bushings 11.1...11.8 may be measured in the Z direction. The axial distance d_{A} indicates the distance or spacing between two adjacent bushings 11.1...11.8 having the different distances d_{S1} and d_{S2} from the root attachment surface 63. Note that the axial distance d_{A} is not the shortest distance between two adjacent ones of the bushings 11.1...11.8 but is measured in the Z direction or, in other words, perpendicular to the root attachment face 63 and from the center of one bushing 11 to the center of the other bushing 11. FIG. 4 further indicates a diameter d₁₁ of the bushings 11.1...11.8 at exemplary bushing 11.1. All bushings 11.1...11.8 have the same diameter d₁₁.

FIG. 5 shows a part of the root portion 61 in a perspective view not yet having the bolts 10 and bushings 11 inserted therein so as to connect to the hub flange 7 or bearing 7. Indicated are once again the staggered rows S.1, S.2 and the axial distance d_{A} measured between the two rows S.1, S.2 or, in other words, centers of adjacent bushings 11.1...11.5. The adjacent bushings 11.1...11.5 are not shown in FIG. 5; instead, their positions in respective cavities 64.1...64.5 configured for receiving the bushings 11.1...11.5 are shown. The centers of the cavities 64.1...64.5 correspond to the centers of the bushings 11.1...11.5.

Besides the axial distance d_{A}, a further design parameter may be measured in the form of a lateral distance or spacing d_{L} between adjacent bushings 11.1...11.5 or cavities 64.1...64.5, which is shown in FIG. 5. The lateral distance d_{L} is measured between the centers of adjacent bushings 11.1...11.5 in the X direction, i.e., parallel to the root attachment face 63.

At the root attachment face 63, the respective cavities 62.1...62.5 configured for receiving the bolts 10 may be seen. Also, the root segment 61 may be seen with its entire above-mentioned thickness t. At half of the thickness t of the root segment 61 or, in other words, at the center or middle of the root segment 61 along its extension in the Y direction, a first centerline C₆₂ may be drawn running along the circumferential direction X. This first centerline C₆₂ separates the surface of the root attachment face 63 into two equally sized surfaces.

A second centerline C₁₀ may be drawn extending in the circumferential direction X and in parallel to the first centerline C₆₂. This second centerline C₁₀ connects the centers of the adjacent bolts 10 or centers of the cavities 62.1...62.5 configured for receiving the bolts 10. In other words, the bolts 10 or cavities 62.1...62.5 are (radially) offset with their centers from the (thickness) center or middle of the root segment 61. This radial offset is defined by a radial distance d_{R} measurable between the two centerlines C₁₀, C₆₂ in the radial direction Y.

Generally, a laminate of the wind turbine blades 5 must include the above-described cavities 62, 64 for the T-bolts formed by the bolts 10 and bushings 11. These cavities 62, 64 create stress concentrations which are magnified the closer together the cavities 62, 64 are spaced together. A root capacity of the root portion 6 defined by the maximum load that the root portion can carry is related to the number of T-bolts that are placed in the root portion 6 and is thus linked to the placement of the T-bolts around the root circumference, and stronger root portions 6 often need larger diameters to fit more bolts 10. Larger root diameters require larger hubs 2, and the production of a larger hub 2 is very expensive. Therefore, there is considerable interest in increasing root capacity without increasing the diameter of the root portion 6.

To increase the root capacity without also requiring an increase of the diameter of the root portion 6, the design of the root assembly 20 shown in FIG. 4 is improved by means of optimal choice of the above-identified design parameters, in particular axial distance d_{A}, bushing diameter d₁₁ and/or radial distance d_{R}. This is explained in the following in more detail.

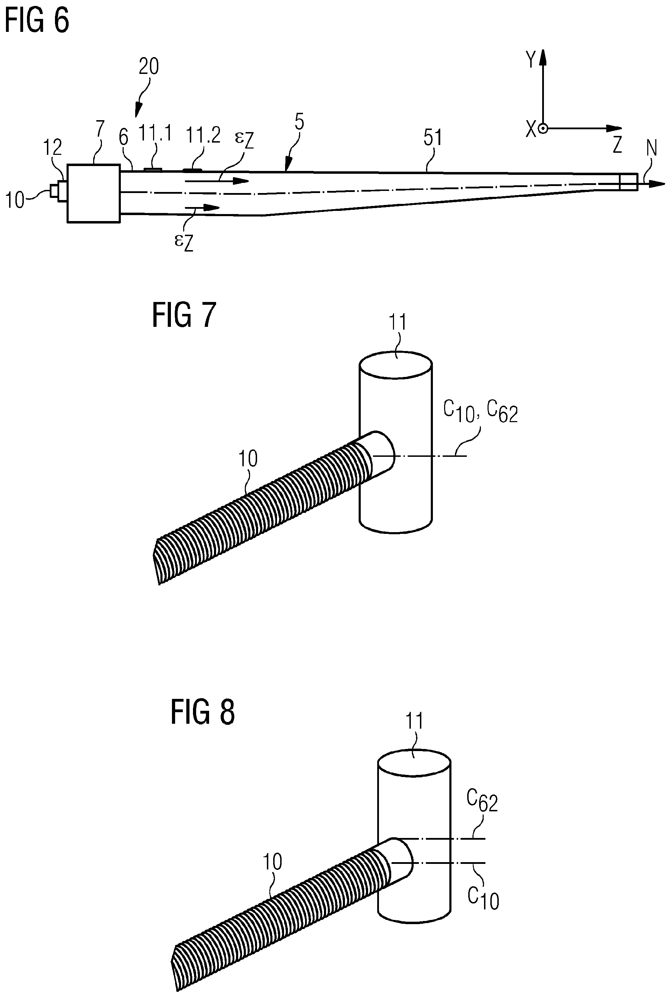

FIG. 6 shows a side sectional view on a wind turbine blade 5 having the root assembly 20 of FIG. 5. Past the bushings 11.1, 11.2 towards a tip of the wind turbine blade 5, a thickness of the wind turbine blade 5 is reduced through a tapered geometry to transition from the root portion 6 to a shell 51 of the wind turbine blade 5. This tapering offsets a plane of the first centerline C₆₂ towards the outer surface of the blade 5, and subsequently, the point at which the root portion 6 is loaded differs between the hub 2 and tip end of the wind turbine blade 5. This may be seen from FIG. 6, where the applied load N is closer to the outer surface of the wind turbine blade 5 than the bolt 10. The result of this is that the outer surface of the wind turbine blade 5 carries more load and therefore experiences more strain. This strain bias through the laminate of the wind turbine blade 5 is disadvantageous because the laminate material is not loaded evenly.

The radial offset between the two centerlines C₁₀, C₆₂ shifts the cavities 62 and thereby the bolts 10 away from the outer blade surface and towards the inside or center of the root portion 6. By means of this shift, the strain profile through the thickness of the wind turbine blade 5 can be equalized. This equalization also comes with a reduction in strain that can be used to increase the root capacity.

FIG. 7 shows a perspective view on a part of a T-bolt according to a design as commonly used in the art. This T-bolt is designed symmetrically. This means that the bolt 10 is attached to the bushing 11 at a center or middle of the bushing 11. In this symmetric design of the T-bolt, a radial offset is not foreseen.

FIG. 8 shows a perspective view on a part of a T-bolt according to a design preferentially used for the root assembly 20 of FIG. 4 with the radially offset cavities 62. The T-bolt has a non-symmetric design, meaning that the attachment point of the bolt 10 at the bushing 11 is offset from a center or middle of the bushing 11. This is indicated by the radially offset centerlines C₁₀, C₆₂ showing the respective positioning of the bolt 10 and the bushing 11 in the root segment 61.

It has been found that for a radial offset of 0 ≤ d_{R}/t ≤ 0.08, a very good strain reduction may be achieved. This means that the position of the centers of the cavities 62 or bolts 10 is shifted towards the inner surface of the wind turbine blade 5 by a distance less than or equal to 8 % of the thickness t of the (laminate) material of the root portion 6 of the wind turbine blade 5. In other words, the second centerline C₁₀ is preferably offset from the first centerline C₆₂ by an amount equal to or less than 8 % of the thickness t of the root segment 61.

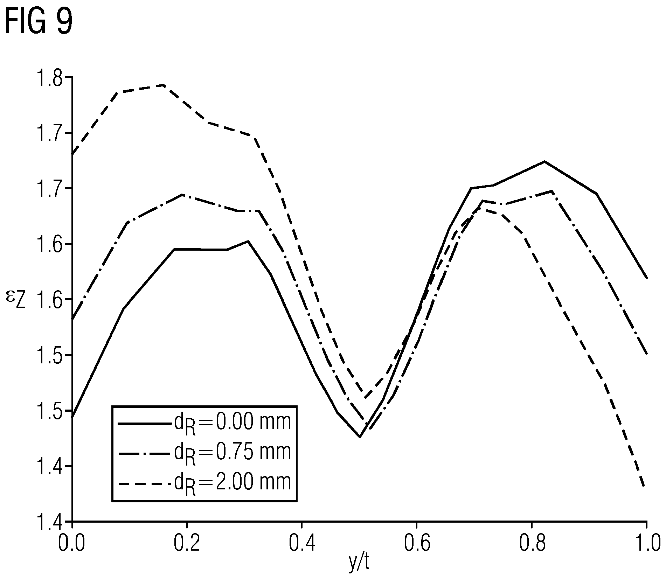

FIG. 9 shows a diagram of the result of a simulation comparing normalized strain profiles ε_{Z} adjacent to the bushing through the thickness t (measured in the Y direction) of the laminate of the wind turbine blade 5 from the inside (surface) of the wind turbine blade 5 (Y/t = 0) to the outside (surface) of the wind turbine blade 5 (Y/t = 1). Three cases are illustrated in this diagram for the radial distance d_{R}, namely d_{R} = 0 mm, d_{R} = 0.75 mm and d_{R} = 2 mm. The result of the last two is an equalization of the strain profile ε_{Z} through the laminate and a reduction in overall strain ε_{Z} in the root portion 6. A radial distance of d_{R} = 0.75 mm delivers the best result. In lab-scale, the radial offset has proven to be most beneficial for d_{R} = 0.1 to 0.3 mm. However, the exact radial distance d_{R} that is most beneficial depends on the axial distance d_{A} and the lateral distance d_{L}.

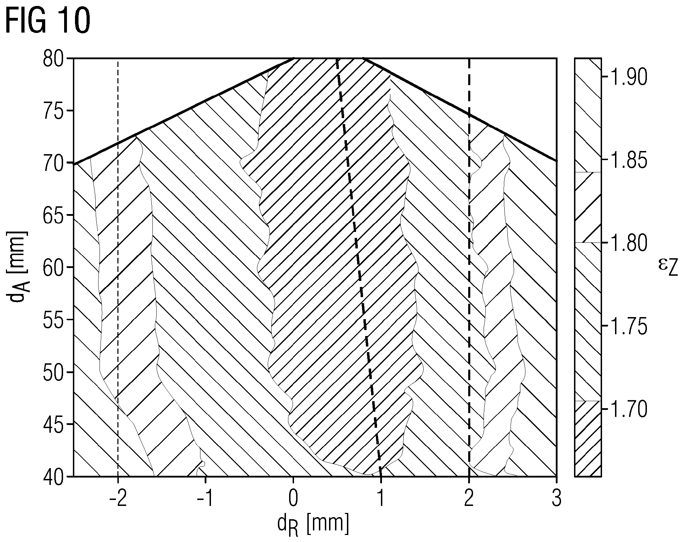

This is explained in more detail with reference to FIG. 10 showing a diagram of maximum overall strains ε_{Z} for different combinations of radial distances d_{R} and axial distances d_{A}. In other words, FIG. 10 shows different design parameters of the root portion 6 and the overall strains ε_{Z} resulting therefrom.

When evaluating exactly which radial distance d_{R} to use as design parameter, the reduction of the strain in the laminate of the wind turbine blade 5 must be considered. This is why the design parameters radial distance d_{R} and axial distance d_{A} preferentially should be considered and chosen in combination. This is best illustrated in FIG. 10. Different combinations of radial distances d_{R} and axial distances d_{A} can be used in combination to achieve similarly low strain levels. The proposed radial offset of the T-bolts can either reduce the maximum strain in the laminate or achieve equivalent strain values at a lower axial distance or spacing d_{A} Both behaviors are achieved by equalizing the strain profile (as seen in FIG. 9), but different radial distances d_{R} may be used to achieve them.

However, when a larger axial distance d_{A} is not possible, it is possible to achieve a further strain reduction at a set axial distance d_{A} or an equivalent strain performance at a lower axial distance d_{A} by radially offsetting the two centerlines C₁₀, C₆₂ from one another.

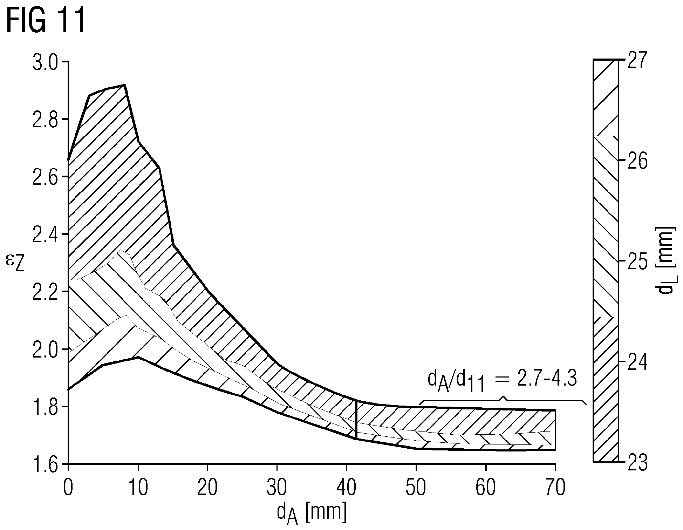

FIG. 11 shows a diagram of numerical strain results ε_{Z} depending on the axial distance d_{A} and the lateral distance d_{L} for a given bushing diameter d₁₁. A quotient range of 2.7 to 4.3 between the axial distance d_{A} and the bushing diameter d₁₁ of the bushings 11 is indicated in the diagram of FIG. 11. With this quotient range, the distance between the two staggered rows S.1, S.2 of bushings 11 are increased to a region of optimal strain reduction as may be taken from the strain profile ε_{Z} corresponding thereto.

The main advantage of the increased axial spacing between the adjacent bushings 11 is lower strain levels around the bolts 10. This creates two key advantages: Firstly, the laminate of the root portion 6 can carry a higher load, and thus support longer wind turbine blades 5, and secondly, the bushings 11 can be spaced closer together (meaning laterally closing together or, in other words, reducing the lateral distance d_{L}), allowing for more bolts 10 around the circumference of the root portion 6, which also allows for stronger and/or longer wind turbine blades 5 by way of lower loads per bolt 10.

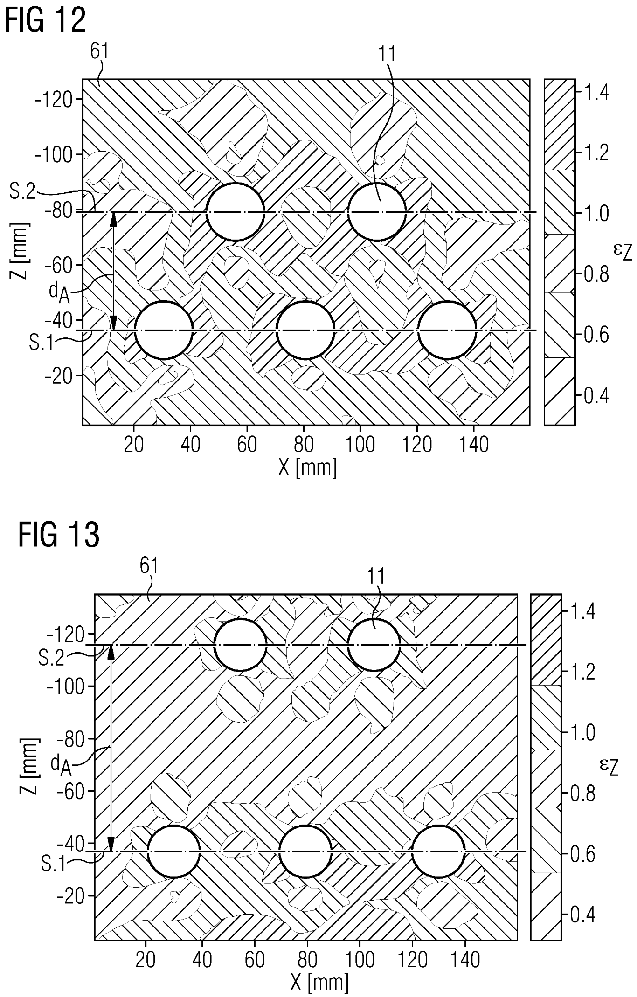

FIG. 12 illustrates a top view on a strain contours representation of the part of the root segment 61 of FIG. 5 with a quotient of 2.3 between the axial distance d_{A} and the bushing diameter d₁₁.

FIG. 13 on the other hand illustrates a top view on a strain contours representation of the part of the root segment 61 of FIG. 5 with a quotient of 4.3 between the axial distance d_{A} and the bushing diameter d₁₁. The greater axial spacing of the bushings 11 significantly reduces the strain magnitude in the root segment 61 of FIG. 13 over the one of the root segment 61 of FIG. 12.

## Claims

1. Root assembly (20) of a wind turbine blade (5) for a wind turbine (1), whereby
a root portion (6) of the root assembly (20) comprises a root segment (61), the root segment (61) having a first centerline (C₆₂) located in the center of a thickness (t) of the root segment (61) measured along a radial direction (Y) of the root segment (61) and extending along a circumferential direction (X) of the root segment (61),
a root attachment face (64) of the root portion (6) is attached to a bearing (7) or a hub flange (7) of the root assembly (20) by means of multiple bolts (10) or root inserts (13), the multiple bolts (10) or root inserts (13) being arranged with their centers along a second centerline (C₁₀) extending along the circumferential direction (X) of the root segment (61),
**characterized in that**,
the second centerline (C₁₀) is offset from the first centerline (C₆₂) , wherein the second centerline (C₁₀) is offset from the first centerline (C₆₂) in a direction towards an inside of the root portion (6), wherein the second centerline (C₁₀) is offset from the first centerline (C₆₂) by 0.5 % to 5 % of the thickness (t) of the root segment (61), wherein the second centerline (C₁₀) extends parallel to the first centerline (C₆₂).

2. Root assembly (20) according to claim 1,
**characterized in that**,
the second centerline (C₁₀) is offset from the first centerline (C₆₂) by less than 15 % of the thickness (t) of the root segment (61).

3. Root assembly (20) according to claim 1 or 2,
**characterized in that,**
the first centerline (C₆₂) extends through the multiple bolts (10) or root inserts (13).

4. Root assembly (20) according to any of the previous claims,
**characterized in that**,
at least half of the multiple bolts (10) or root inserts (13) of the root assembly (20) are arranged with their centers along the second centerline (C₁₀).

5. Root assembly (20) according to any of the previous claims,
**characterized in that**,
each of the multiple bolts (10) is connected to one of multiple bushings (11) fixedly arranged within the root segment (61) such that the multiple bolts (10) are arranged adjacent to each other along a circumference of the root portion (6), and the bushings (11) are arranged adjacent to each other along the circumference of the root portion (6), and adjacent bushings (11) are offset from one another in a way such that adjacent bushings (11) are provided at an axial distance (d_{A}) from one another, the axial distance (d_{A}) being measured in an axial direction from the root attachment face (64) to the bushings (11) and between centers of the adjacent bushings (11).

6. Root assembly (20) according to claim 5,
**characterized in that**,
a quotient between the axial distance (d_{A}) and a bushing diameter (d₁₁) of the bushings (11) is 2.5 or greater.

7. Root assembly (20) according to claim 5 or 6,
**characterized in that**,
a quotient between the axial distance (d_{A}) and a bushing diameter (d_{B}) of the bushings (11) is in the range of 2.5 to 5.

8. Root assembly (20) according to any of claims 5 to 7,
**characterized in that**,
a quotient between the axial distance (d_{A}) and a bushing diameter (d_{B}) of the bushings (11) is within the range of 2.7 to 4.8.

9. Root assembly (20) according to any of claims 5 to 8,
**characterized in that**,
a quotient between the axial distance (d_{A}) and a bushing diameter (d_{B}) of the bushings (11) is within the range of 3 to 4.5.

10. Root assembly according to any of claims 5 to 9,
**characterized in that**,
the multiple bolts (10) have a first length (L.1) or a second length (L.2), wherein the second length (L.2) is greater than the first length (L.1), and wherein the bolts (10) of the multiple bolts (10) having the first length (L.1) and the bolts (10) of the multiple bolts (10) having the second length (L.2) are alternatingly connected to the adjacent offset bushings (11).

11. Root assembly (20) according to any of the previous claims,
**characterized in that**,
the multiple bolts (10) are secured against the bearing (7) or the hub flange (7) by means of nuts (12).

12. Wind turbine blade (5) comprising the root assembly (20) according to any of the previous claims.

13. Wind turbine (1) comprising at least one wind turbine blade (5) according to claim 12.

## Patentansprüche

1. Wurzelbaugruppe (20) einer Windturbinenschaufel (5) für eine Windturbine (1), wobei
ein Wurzelabschnitt (6) der Wurzelbaugruppe (20) ein Wurzelsegment (61) umfasst, wobei das Wurzelsegment (61) eine erste Mittellinie (C₆₂) aufweist, die sich in der Mitte einer Dicke (t) des Wurzelsegments (61) befindet, die entlang einer radialen Richtung (Y) des Wurzelsegments (61) gemessen wird und sich entlang einer Umfangsrichtung (X) des Wurzelsegments (61) erstreckt, wobei eine Wurzelbefestigungsfläche (64) des Wurzelabschnitts (6) mittels mehrerer Bolzen (10) oder Wurzeleinsätze (13) an einem Lager (7) oder einem Nabenflansch (7) der Wurzelbaugruppe (20) befestigt ist, wobei die mehreren Bolzen (10) oder Wurzeleinsätze (13) mit ihren Mittelpunkten entlang einer zweiten Mittellinie (C₁₀) angeordnet sind, die sich entlang der Umfangsrichtung (X) des Wurzelsegments (61) erstreckt,
**dadurch gekennzeichnet, dass**
die zweite Mittellinie (C₁₀) von der ersten Mittellinie (C₆₂) versetzt ist, wobei die zweite Mittellinie (C₁₀) von der ersten Mittellinie (C₆₂) in einer Richtung zu einer Innenseite des Wurzelabschnitts (6) hin versetzt ist, wobei die zweite Mittellinie (C₁₀) von der ersten Mittellinie (C₆₂) um 0,5 % bis 5 % der Dicke (t) des Wurzelsegments (61) versetzt ist, wobei die zweite Mittellinie (₁₀) parallel zu der ersten Mittellinie (C₆₂) verläuft.

2. Wurzelbaugruppe (20) nach Anspruch 1,
**dadurch gekennzeichnet, dass**
die zweite Mittellinie (C₁₀) von der ersten Mittellinie (C₆₂) um weniger als 15 % der Dicke (t) des Wurzelsegments (61) versetzt ist.

3. Wurzelbaugruppe (20) nach Anspruch 1 oder 2,
**dadurch gekennzeichnet, dass**
die erste Mittellinie (C₆₂) durch die mehreren Bolzen (10) oder Wurzeleinsätze (13) verläuft.

4. Wurzelbaugruppe (20) nach einem der vorhergehenden Ansprüche,
**dadurch gekennzeichnet, dass**
mindestens die Hälfte der mehreren Bolzen (10) oder Wurzeleinsätze (13) der Wurzelbaugruppe (20) mit ihren Mittelpunkten entlang der zweiten Mittellinie (C₁₀) angeordnet sind.

5. Wurzelbaugruppe (20) nach einem der vorhergehenden Ansprüche,
**dadurch gekennzeichnet, dass**
jeder der mehreren Bolzen (10) mit einer von mehreren Buchsen (11) verbunden ist, die fest innerhalb des Wurzelsegments (61) angeordnet sind, so dass die mehreren Bolzen (10) entlang eines Umfangs des Wurzelabschnitts (6) benachbart zueinander angeordnet sind und die Buchsen (11) entlang des Umfangs des Wurzelabschnitts (6) benachbart zueinander angeordnet sind und benachbarte Buchsen (11) derart voneinander versetzt sind, dass benachbarte Buchsen (11) in einem axialen Abstand (d_{A}) voneinander bereitgestellt sind, wobei der axiale Abstand (d_{A}) in axialer Richtung von der Wurzelbefestigungsfläche (64) zu den Buchsen (11) und zwischen den Mittelpunkten der benachbarten Buchsen (11) gemessen wird.

6. Wurzelbaugruppe (20) nach Anspruch 5,
**dadurch gekennzeichnet, dass**
ein Quotient zwischen dem axialen Abstand (d_{A}) und einem Buchsendurchmesser (d₁₁) der Buchsen (11) 2,5 oder größer ist.

7. Wurzelbaugruppe (20) nach Anspruch 5 oder 6,
**dadurch gekennzeichnet, dass**
der Quotient zwischen dem axialen Abstand (d_{A}) und einem Buchsendurchmesser (d_{B}) der Buchsen (11) im Bereich von 2,5 bis 5 liegt.

8. Wurzelbaugruppe (20) nach einem der Ansprüche 5 bis 7, **dadurch gekennzeichnet, dass**
der Quotient zwischen dem axialen Abstand (d_{A}) und einem Buchsendurchmesser (d_{B}) der Buchsen (11) im Bereich von 2,7 bis 4,8 liegt.

9. Wurzelbaugruppe (20) nach einem der Ansprüche 5 bis 8, **dadurch gekennzeichnet, dass**
der Quotient zwischen dem axialen Abstand (d_{A}) und einem Buchsendurchmesser (d_{B}) der Buchsen (11) im Bereich von 3 bis 4,5 liegt.

10. Wurzelbaugruppe nach einem der Ansprüche 5 bis 9,
**dadurch gekennzeichnet, dass**
die mehreren Bolzen (10) eine erste Länge (L.1) oder eine zweite Länge (L.2) aufweisen, wobei die zweite Länge (L.2) größer ist als die erste Länge (L.1), und wobei die Bolzen (10) der mehreren Bolzen (10) mit der ersten Länge (L.1) und die Bolzen (10) der mehreren Bolzen (10) mit der zweiten Länge (L.2) abwechselnd mit den benachbarten versetzten Buchsen (11) verbunden sind.

11. Wurzelbaugruppe (20) nach einem der vorhergehenden Ansprüche,
**dadurch gekennzeichnet, dass**
die mehreren Bolzen (10) mittels Muttern (12) an dem Lager (7) oder dem Nabenflansch (7) gesichert sind.

12. Windturbinenschaufel (5), die die Wurzelbaugruppe (20) nach einem der vorhergehenden Ansprüche umfasst.

13. Windturbine (1), die mindestens eine Windturbinenschaufel (5) nach Anspruch 12 umfasst.

## Revendications

1. Ensemble de base (20) d'une pale d'éolienne (5) pour une éolienne (1), dans lequel :
une partie de base (6) de l'ensemble de base (20) comprend un segment de base (61), le segment de base (61) comportant une première ligne centrale (C₆₂) qui est localisée au centre d'une épaisseur (t) du segment de base (61) tel que mesuré suivant une direction radiale (Y) du segment de base (61) et qui est étendue suivant une direction circonférentielle (X) du segment de base (61) ;
une face de liaison de base (64) de la partie de base (6) est liée à un palier (7) ou à une bride de moyeu (7) de l'ensemble de base (20) au moyen de multiples boulons (10) ou de multiples inserts de base (13), les multiples boulons (10) ou les multiples inserts de base (13) étant agencés de telle sorte que leurs centres soient suivant une deuxième ligne centrale (C₁₀) qui est étendue suivant la direction circonférentielle (X) du segment de base (61) ;
**caractérisé en ce que**
la deuxième ligne centrale (C₁₀) est décalée par rapport à la première ligne centrale (C₆₂), dans lequel la deuxième ligne centrale (C₁₀) est décalée par rapport à la première ligne centrale (C₆₂) dans une direction en direction d'un intérieur de la partie de base (6), dans lequel la deuxième ligne centrale (C₁₀) est décalée par rapport à la première ligne centrale (C₆₂) de 0,5 % à 5 % de l'épaisseur (t) du segment de base (61), dans lequel la deuxième ligne centrale (C₁₀) est étendue parallèlement à la première ligne centrale (C₆₂).

2. Ensemble de base (20) selon la revendication 1, **caractérisé en ce que** la deuxième ligne centrale (C₁₀) est décalée par rapport à la première ligne centrale (C₆₂) de moins de 15 % de l'épaisseur (t) du segment de base (61).

3. Ensemble de base (20) selon la revendication 1 ou 2, **caractérisé en ce que** la première ligne centrale (C₆₂) est étendue au travers des multiples boulons (10) ou des multiples inserts de base (13).

4. Ensemble de base (20) selon l'une quelconque des revendications précédentes, **caractérisé en ce qu'**au moins la moitié des multiples boulons (10) ou des multiples inserts de base (13) de l'ensemble de base (20) sont agencés de telle sorte que leurs centres soient situés suivant la deuxième ligne centrale (C₁₀).

5. Ensemble de base (20) selon l'une quelconque des revendications précédentes, **caractérisé en ce que** chacun des multiples boulons (10) est connecté à l'une de multiples douilles (11) qui sont agencées de façon fixe à l'intérieur du segment de base (61) de telle sorte que les multiples boulons (10) soient agencés de manière à ce qu'ils soient adjacents les uns aux autres suivant une circonférence de la partie de base (6), et les douilles (11) sont agencées de manière à ce qu'elles soient adjacentes les unes aux autres suivant la circonférence de la partie de base (6), et des douilles adjacentes (11) sont décalées les unes par rapport aux autres de telle sorte que des douilles adjacentes (11) soient prévues à une distance axiale (d_{A}) les unes par rapport aux autres, la distance axiale (d_{A}) étant mesurée dans une direction axiale depuis la face de liaison de base (64) jusqu'aux douilles (11) ainsi qu'entre des centres des douilles adjacentes (11).

6. Ensemble de base (20) selon la revendication 5, **caractérisé en ce qu'**un quotient entre la distance axiale (d_{A}) et un diamètre de douille (d₁₁) des douilles (11) est égal à 2,5 ou plus.

7. Ensemble de base (20) selon la revendication 5 ou 6, **caractérisé en ce qu'**un quotient entre la distance axiale (d_{A}) et un diamètre de douille (d_{B}) des douilles (11) s'inscrit à l'intérieur de la plage de 2,5 à 5.

8. Ensemble de base (20) selon l'une quelconque des revendications 5 à 7, **caractérisé en ce qu'**un quotient entre la distance axiale (d_{A}) et un diamètre de douille (d_{B}) des douilles (11) s'inscrit à l'intérieur de la plage de 2,7 à 4,8.

9. Ensemble de base (20) selon l'une quelconque des revendications 5 à 8, **caractérisé en ce qu'**un quotient entre la distance axiale (d_{A}) et un diamètre de douille (d_{B}) des douilles (11) s'inscrit à l'intérieur de la plage de 3 à 4,5.

10. Ensemble de base (20) selon l'une quelconque des revendications 5 à 9, **caractérisé en ce que** les multiples boulons (10) présentent une première longueur (L.1) ou une deuxième longueur (L.2), dans lequel la deuxième longueur (L.2) est plus grande que la première longueur (L.1), et dans lequel les boulons (10) des multiples boulons (10) présentant la première longueur (L.1) et les boulons (10) des multiples boulons (10) présentant la deuxième longueur (L.2) sont connectés en alternance aux douilles décalées adjacentes (11).

11. Ensemble de base (20) selon l'une quelconque des revendications précédentes, **caractérisé en ce que** les multiples boulons (10) sont fixés contre le palier (7) ou la bride de moyeu (7) au moyen d'écrous (12).

12. Pale d'éolienne (5) comprenant l'ensemble de base (20) selon l'une quelconque des revendications précédentes.

13. Éolienne (1) comprenant au moins une pale d'éolienne (5) selon la revendication 12.
